# EUROPEAN PATENT APPLICATION

(11) **EP 4 822 893 A1**
(43) Date of publication of application: **14.10.2026**
(21) Application number: 24900884.8
(22) Date of filing: 07.11.2024
(51) Int. Cl.: H01Q 3/04, H01Q 1/12, F16B 35/04, H02K 7/00, G01P 15/00

(54) **CLAMPING APPARATUS FOR ANTENNA**

(30) Priority: 08.12.2023 KR 20230177705
(71) Applicant: KMW Inc., Hwaseong-si, Gyeonggi-do 18462 (KR)
(72) Inventor: PARK, Dae-myung, Hwaseong-Si Gyeonggi-do 18462 (KR); KIM, Hee, Osan-si Gyeonggi-do 18131 (KR); KIM, Dong Hee, Pyeongtaek-si Gyeonggi-do 17850 (KR); RYU, Jeoung Jun, Anyang-si, Gyeonggi-do 13988 (KR)
(74) Representative: impuls legal PartG mbB
(86) International application number: PCT/KR2024/017470
(87) International publication number: WO 2025/121697

(57) **Abstract**

A clamping apparatus for an antenna is disclosed. The present disclosure according to at least one embodiment provides a clamping apparatus for an antenna, including a housing having one side that is coupled to a support pole, a driving unit including a motor and a gearbox connected to the motor, and housed within the housing, a shaft connected to the driving unit and rotating in conjunction with a rotational motion of the motor, a nut coupled to the shaft and moving in a direction parallel to a direction of extension of the shaft in accordance with the rotational motion of the shaft, at least one pivot unit pivoting about a pivot axis in response to a linear movement of the nut, and a pivot bracket unit pivoting in conjunction with a pivoting movement of the at least one pivot unit, and having one end for coupling with an antenna module so that the antenna module rotates about the pivot axis in response to the pivoting movement of the at least one pivot unit.

## Description

### [CROSS-REFERENCE TO RELATED APPLICATIONS]

This application is based on, and claims priority from, Korean Patent Application Number 10-2023-0153848, filed November. 8, 2023, and Korean Patent Application No. 10-2023-0177705, filed December. 8, 2023, the disclosure of which are incorporated herein its entirety.

### [Technical Field]

The present disclosure relates to a clamping apparatus for an antenna.

### [Background]

The statements in this section merely provide background information related to the present disclosure and do not necessarily constitute prior art.

A wireless communication technology in general, and for example, the multiple-input multiple-output (MIMO) technology uses a plurality of antennas to dramatically enhance data transmission capacity, incorporating a transmitter for transmitting different data via the respective transmitting antennas and a receiver for identifying different transmitted data via appropriate signal processing, which is called a spatial multiplexing technique.

Therefore, the greater the number of transmit antennas and receive antennas, the greater channel capacity is obtained for allowing more data to be transmitted. For example, a ten-fold increase of antennas secures about 10 times the channel capacity of a current single-antenna system when using the same frequency band.

Meanwhile, increasing the antennas involves accordingly increased numbers of transmitters and filters. Nevertheless, due to lease costs at installation sites and spatial constraints, the reality is that RF components such as antennas, filters, power amplifiers, transceivers, etc. need to be made small, lightweight, and inexpensive. Massive MIMO requires high power to expand coverage, but the power consumption and heat generation resulting from this high power act as negative factors in reducing the total weight and size.

In particular, when installing, in limited spaces, MIMO antennas with a stacked structure of modules integrating RF and digital components, there is a growing need for compact and miniaturized designs across the multiple layers constituting the MIMO antenna to maximize ease of installation and space utilization. Furthermore, there is a strong demand for the ability to freely adjust the orientation of antenna devices mounted on a single support pole.

Conventional antenna clamping devices are provided between a support pole and an antenna device to enable directional adjustment of the antenna, but they suffer from very slow adjustment speeds. Furthermore, bulky clamping devices increase the distances between the support pole and the antenna device, which can lead to undesirable effects caused by the load of the antenna assembly.

Furthermore, due to the nature of the installation location of the antenna device, the clamping device may require seismic design.

### [Disclosure]

### [Technical Problem]

Accordingly, the present disclosure seeks to address these technical problems by providing a clamping apparatus for an antenna, which is compact in overall volume and size, possesses seismic resistance, and allows for rapid adjustment of the antenna device's orientation.

### [Summary]

In at least one embodiment, the present disclosure provides a clamping apparatus for an antenna, including a housing configured to have one side that is coupled to a support pole, a driving unit including a motor and a gearbox connected to the motor, and housed within the housing, a shaft configured to be connected to the driving unit and to rotate in conjunction with a rotational motion of the motor, a nut configured to be coupled to the shaft and to move in a direction parallel to a direction of extension of the shaft in accordance with the rotational motion of the shaft, at least one pivot unit configured to pivot about a pivot axis in response to a linear movement of the nut, and a pivot bracket unit configured to pivot in conjunction with a pivoting movement of the at least one pivot unit, and configured to have one end for coupling with an antenna module so that the antenna module rotates about the pivot axis in response to the pivoting movement of the at least one pivot unit.

### [Advantageous Effects]

As described above, example embodiments of the present disclosure can provide a clamping apparatus for an antenna, which is compact in overall volume and size, possesses seismic resistance, and allows for rapid adjustment of the antenna device's orientation.

### [Brief Description of the Drawings]

FIG. 1 is an exploded perspective view with a partial enlarged view of a clamping apparatus for an antenna according to at least one embodiment of the present disclosure.
FIG. 2 is a perspective view of the assembled clamping apparatus for an antenna according to at least one embodiment of the present disclosure, arranged between a support pole and an antenna module.
FIG. 3 shows the clamping apparatus for an antenna according to at least one embodiment of the present disclosure in a non-pivoted state, with some components omitted.
FIG. 4 shows the clamping apparatus for an antenna according to at least one embodiment of the present disclosure in a pivoted state in one direction, with some components omitted.
FIG. 5 shows the clamping apparatus for an antenna according to at least one embodiment of the present disclosure in a pivoted state in the other direction, with some components omitted.
FIG. 6 illustrates a support pole according to at least one embodiment of the present disclosure, inclined relative to the ground surface.

### REFERENCE NUMERALS

| | | | |
|---|---|---|---|
| 10: | clamping apparatus for antenna | 100: | housing |
| 110: | fixing bracket unit | 120: | driving unit |
| 122: | motor | 124: | gearbox |
| 130: | shaft | 135: | trapezoidal thread |
| 140: | nut | 150: | multiple first connecting units |
| 160: | multiple bearing units | 170: | at least one pivot unit |
| 175: | through hole | 180: | pivot bracket unit |
| 190: | multiple second connecting units | 200: | antenna module |
| 250: | support pole | PA: | pivot axis |

### [Detailed Description]

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

Additionally, various ordinal numbers or alpha codes such as first, second, i), ii), a), b), etc., are prefixed solely to differentiate one component from the other but not to imply or suggest the substances, order, or sequence of the components. Throughout this specification, when a part "includes" or "comprises" a component, the part is meant to further include other components, not to exclude thereof unless specifically stated to the contrary.

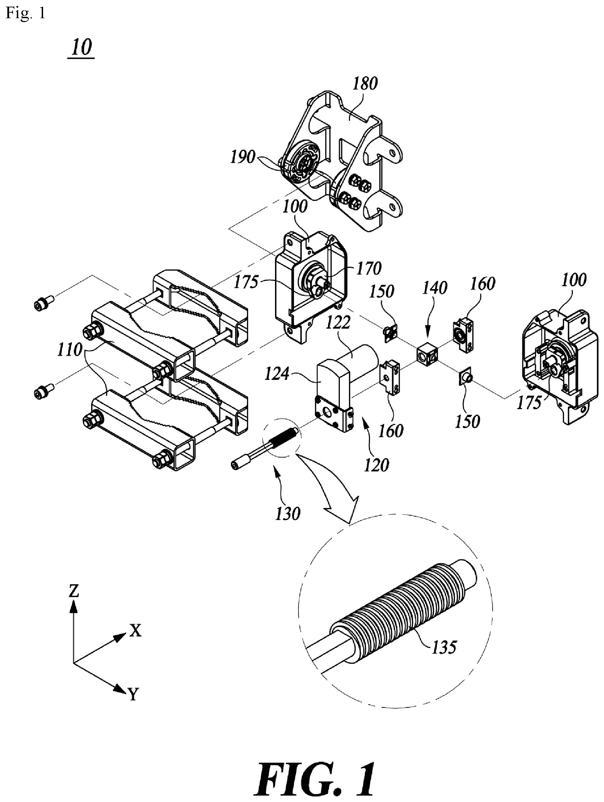

FIG. 1 is an exploded perspective view with a partial enlarged view of a clamping apparatus for an antenna according to at least one embodiment of the present disclosure.

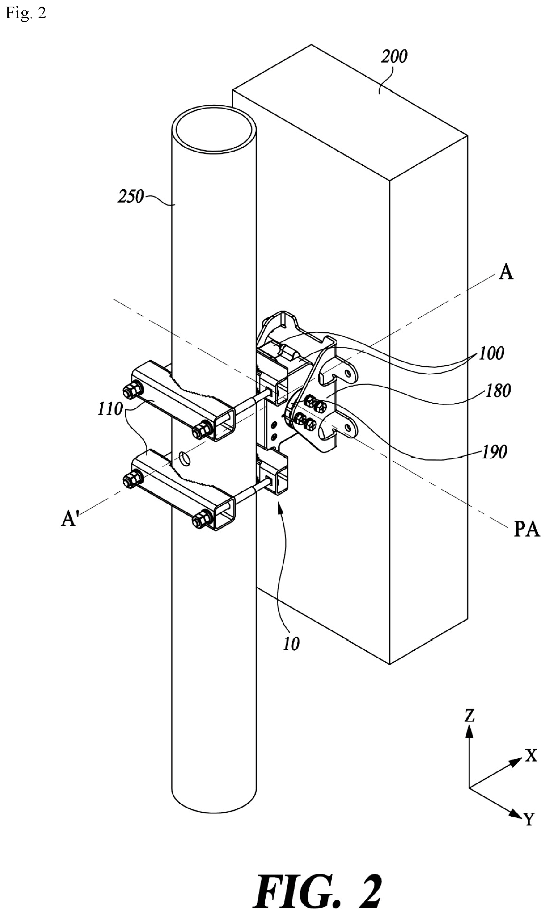

FIG. 2 is a perspective view of the assembled clamping apparatus for an antenna according to at least one embodiment of the present disclosure, arranged between a support pole and an antenna module.

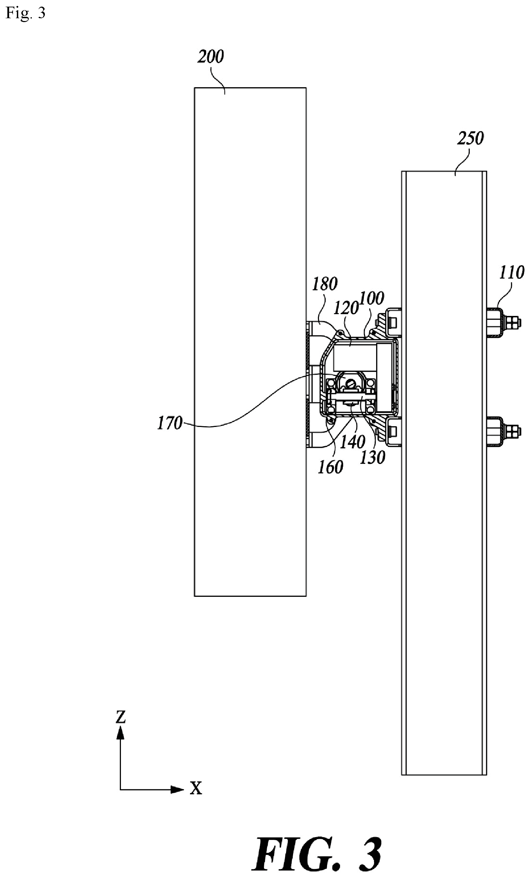

FIG. 3 shows the clamping apparatus for an antenna according to at least one embodiment of the present disclosure in a non-pivoted state, with some components omitted.

Referring to FIGS. 1 through 3, the clamping apparatus for antenna 10 according to at least one embodiment of the present disclosure includes a housing 100, a driving unit 120, a shaft 130, a nut 140, multiple bearing units 160, at least one pivot unit 170, a pivot bracket unit 180, multiple first connecting units 150, and multiple second connecting units 190.

The housing 100 is configured to have one side that may be coupled to a support pole 250. For example, fixing bracket units 110 may be positioned between the housing 100 and the support pole 250 to secure the housing 100 to the support pole 250, thereby preventing the housing 100 from moving or rotating relative to the support pole 250.

Although FIG. 1 shows the housing 100 as including two separable components, this is not necessarily limiting, and the housing 100 may also be made of a single component.

The driving unit 120 includes a motor 122 and a gearbox 124 connected to the motor 122, and is housed inside the housing 100. By being housed inside the housing 100, the driving unit 120 may be protected from external impacts or contaminants.

The gearbox 124 may be positioned at one end of the motor 122, and the gearbox 124 may be configured to be perpendicular to the motor axis (not shown) of the motor 122. This is to minimize the overall width of the driving unit 120 in the direction parallel to the motor axis. Furthermore, to minimize the overall size of the housing 100, the driving unit 120 may be arranged adjacent to the inner surface of the housing 100 and, for example, may be fixed to the inner surface of the housing 100.

At least one gear may be arranged inside the gearbox 124 to function as a speed reducer.

The shaft 130 is configured to be connected to the driving unit 120 and rotate in conjunction with the rotational motion of the motor 122. The rotational motion of the motor 122 may be transmitted to the shaft 130 via the gearbox 124.

Here, the direction of extension of the shaft 130 and the motor axis of the motor 122 are non-coaxial but parallel. More particularly, shaft 130 is spaced apart from motor 122 in a direction perpendicular to the motor axis, such that at least some of the motor 122, gearbox 124, and shaft 130 may collectively form a 'C'-shaped configuration, thereby minimizing the width of the clamping apparatus for antenna 10 in a direction parallel to the motor axis.

The nut 140 is configured to be coupled to the shaft 130 and move in response to the rotational motion of the shaft 130 and in a direction parallel to the direction of extension of the shaft 130. In other words, the nut 140 may serve as a medium for converting rotational motion into linear motion.

Meanwhile, to enable the linear motion of the nut 140, a trapezoidal thread 135 may be formed on at least a portion of the shaft 130, and in this case, the nut 140 may be configured to be threadedly engaged with the trapezoidal thread 135. Therefore, when the shaft 130 rotates, the nut 140 may move in one direction or the other along the direction of extension of the shaft 130, depending on the direction of rotation.

The travel distance of the nut 140 may be determined by the total length over which the trapezoidal thread 135 is formed, and this, in turn, may determine the pivot range of at least one pivot unit 170. In other words, as the total length over which the trapezoidal thread 135 is formed increases, the pivot range of an antenna module 200 may also increase, and as the total length decreases, the pivot range of the antenna module 200 may also decrease.

Compared to conventional clamping devices that use worm gears, the clamping apparatus for antenna 10 utilizing the trapezoidal thread 135 possesses high strength while simultaneously enabling the rapid conversion of rotational motion into linear motion. This can increase the overall pivoting speed of the clamping apparatus for antenna 10, and can maintain the internal components firmly supported even under strong vibrations, such as those caused by an earthquake.

The multiple bearing units 160 are mounted on the shaft 130 such that they surround at least a portion of the shaft 130 on both sides in the direction of the direction of extension of the shaft 130. For example, the multiple bearing units 160 may be configured to be spaced apart along the shaft 130 by a distance equal to the total length over which the trapezoidal thread 135 is formed.

In this case, to ensure stable support of the multiple bearing units 160, one of the multiple bearing units 160 may be configured to contact the inner surface of the housing 100, while the other may be configured to contact one side of the driving unit 120.

At least one pivot unit 170 is configured to pivot about a pivot axis PA in response to the linear motion of the nut 140. In FIG. 1, at least one pivot unit 170 is shown as including two pivot units 170 joined in a direction parallel to the pivot axis PA; however, this is not necessarily limiting, and it may be configured as a single pivot unit 170 having a form identical or similar to that of the two joined pivot units 170.

The pivot bracket unit 180 is configured to pivot in conjunction with the pivoting motion of the at least one pivot unit 170, and to have one side that is coupled to the antenna module 200 to render the same to rotate about the pivot axis PA in accordance with the pivoting motion of the at least one pivot unit 170.

Meanwhile, for structural stability, the at least one pivot unit 170 and the pivot bracket unit 180 may be formed symmetrically with respect to an imaginary plane perpendicular to the pivot axis PA and passing through the center of the shaft 130.

Consequently, the rotational motion of the motor 122 is converted into linear motion by the nut 140, the linear motion of the nut 140 pivots at least one pivot unit 170, and the pivot of at least one pivot unit 170 causes the pivot bracket unit 180 to pivot, thereby allowing the antenna module 200 to rotate about the pivot axis PA.

The clamping apparatus for antenna 10 according to at least one embodiment of the present disclosure has the advantage of enabling rapid adjustment of the orientation of the antenna module 200 while maintaining a compact structure.

The pivot axis PA may be perpendicular to a direction parallel to the extension direction of the shaft 130. For example, the direction parallel to the direction of extension of the shaft 130 may be parallel to the X-axis in FIGS. 1 through 3, and in this case, the pivot axis PA may be parallel to the Y-axis in FIGS. 1 and 2.

Meanwhile, the pivot axis PA may be perpendicular to or parallel to the longitudinal direction of the support pole 250. For example, in FIGS. 1 and 2, the pivot axis PA may be perpendicular to the longitudinal direction of the support pole 250, such as the Z-axis direction, but is not necessarily limited thereto.

For example, in FIGS. 1 through 3, the pivot axis PA is shown in a direction parallel to the Y-axis, but the pivot axis PA may also be parallel to the Z-axis. In this case, the clamping apparatus for antenna 10 shown in FIG. 2 may be positioned rotated 90 degrees clockwise or counterclockwise between the support pole 250 and the antenna module 200.

Therefore, depending on the orientation in which the clamping apparatus for antenna 10 according to at least one embodiment of the present disclosure is positioned between the support pole 250 and the antenna module 200, it may be configured to tilt the antenna module 200 or to steer the antenna module 200. Here, tilting refers to inclining the antenna module 200 so that it forms a predetermined angle with respect to the ground surface, and steering refers to moving the antenna module 200 along an arc while maintaining the same height relative to the ground surface.

Meanwhile, when based on a direction perpendicular to both the motor axis and the pivot axis PA - for example, based on the Z-axis direction in FIGS. 1 through 3 - the pivot axis PA may be positioned between the motor 122 and the shaft 130.

In this case, when viewed from a direction perpendicular to both the motor axis and the pivot axis PA, the components may be arranged inside the housing 100 in the order of the shaft 130, the pivot axis PA, and the motor 122. By arranging the pivot axis PA between the shaft 130 and the motor 122 in this manner, the overall size of the clamping apparatus for antenna 10 can be made compact.

The multiple first connecting units 150 each extend in a direction at least partially parallel to the pivot axis PA and are fixed on both sides of the nut 140 relative to the direction parallel to the pivot axis PA. Here, each of the multiple first connecting units 150 may be connected to each of the at least one pivot unit 170 at a position spaced a predetermined distance from the pivot axis PA.

Therefore, the multiple first connecting units 150 may move linearly together in response to the linear motion of the nut 140, which may cause at least one pivot unit 170 to pivot.

Meanwhile, when the total length of the trapezoidal thread 135 is constant, the pivoting range of at least one pivot unit 170 may vary depending on the distance at which each of the multiple first connecting units 150 is spaced from the pivot axis PA.

Furthermore, the at least one pivot unit 170 may each include a through hole 175 formed in a direction parallel to the pivot axis PA in an area spaced apart from the pivot axis PA. In this case, each of the multiple first connecting units 150 may be received by at least a portion thereof within the through hole 175 such that the portion contacts the inner circumferential surface of the through hole 175.

Accordingly, as the multiple first connecting units 150 move in a linear motion, at least one pivot unit 170 may pivot about the pivot axis PA. To ensure smooth pivoting, the portion of each of the multiple first connecting units 150, which is received within the through hole 175 may have a cross-sectional area smaller than that of the through hole 175.

The multiple second connecting units 190 are spaced apart in a direction parallel to the pivot axis PA, and one end of each of the multiple second connecting units 190 is connected to at least one pivot unit 170, while the other end is connected to the pivot bracket unit 180. Therefore, the pivoting of at least one pivot unit 170 may be transmitted to the pivot bracket unit 180 via the multiple second connecting units 190.

At least a portion of each of the multiple second connecting units 190 may be disposed outside the housing 100, and in this case, the pivot bracket unit 180 may be configured to surround at least some of the housing 100, such as the housing 100's opposing sides in the direction of pivot axis PA and at least some of the antenna module 200's side. Consequently, the housing 100 and the internal components of the housing 100 can be protected from external impacts.

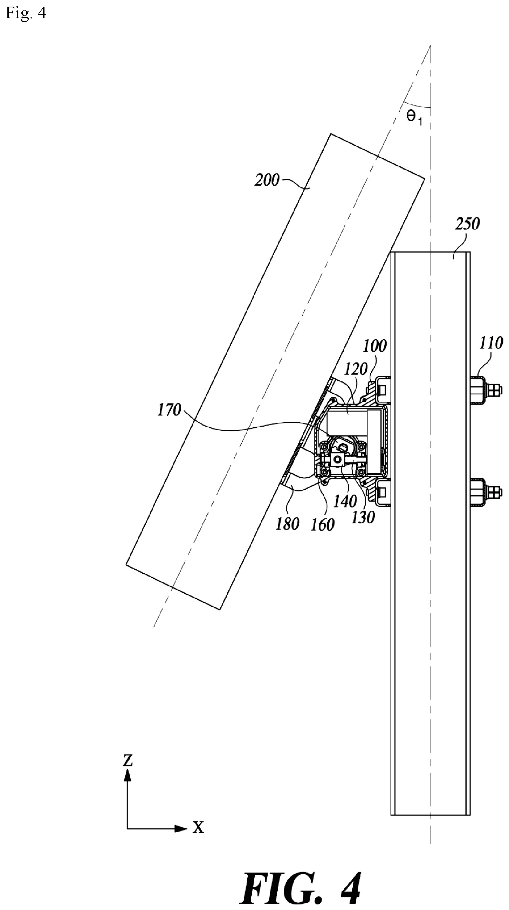

FIG. 4 shows the clamping apparatus for an antenna according to at least one embodiment of the present disclosure in a pivoted state in one direction, with some components omitted.

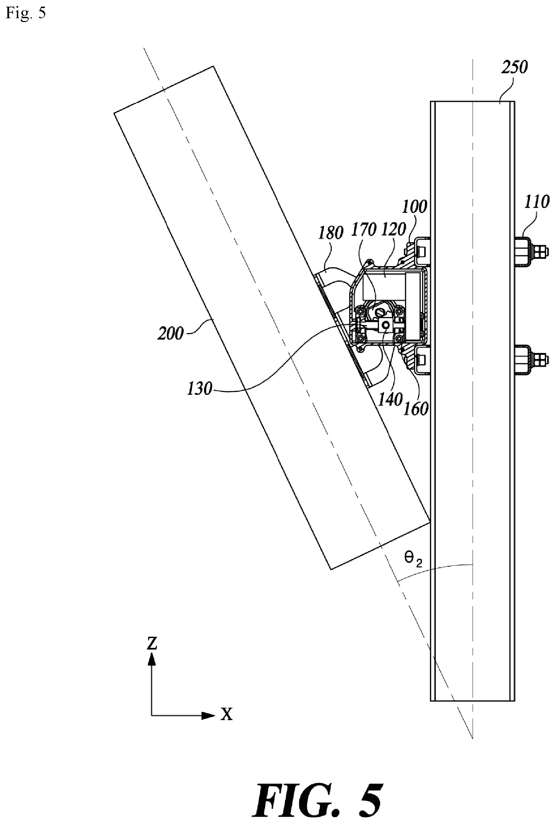

FIG. 5 shows the clamping apparatus for an antenna according to at least one embodiment of the present disclosure in a pivoted state in the other direction, with some components omitted.

FIGS. 4 and 5 show the nut 140 in full view, unlike FIG. 3.

Referring to FIGS. 4 and 5, the antenna module 200 may pivot by angles θ₁ and θ₂ in response to the linear movement of the nut 140; for example, the absolute values of θ₁ and θ₂ may be up to 25°.

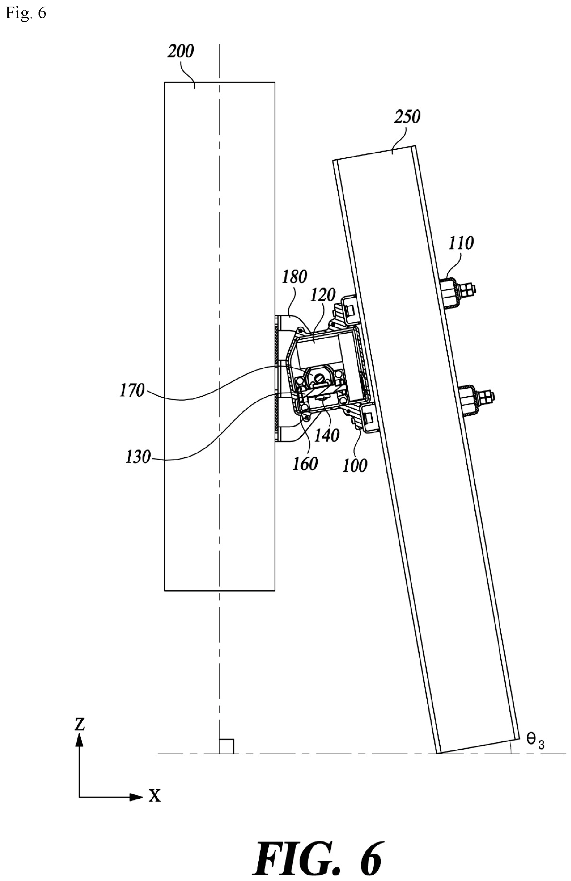

FIG. 6 illustrates the support pole according to at least one embodiment of the present disclosure, inclined relative to the ground surface.

Referring to FIG. 6, the support pole 250 is shown to be inclined by an angle θ₃ relative to the ground surface, while the antenna module 200 is shown to be perpendicular to the ground surface. In this case, the clamping apparatus for antenna 10 according to at least one embodiment of the present disclosure may include an acceleration sensor (not shown) and may appropriately rotate the antenna module 200 into a perpendicular posture to the ground surface.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the embodiments of the present disclosure is not limited by the illustrations. Accordingly, one of ordinary skill would understand the scope of the claimed invention is not to be limited by the above explicitly described embodiments but by the claims and equivalents thereof.

## Claims

1. A clamping apparatus for an antenna, the clamping apparatus comprising:
a housing configured to have one side that is coupled to a support pole;
a driving unit comprising a motor and a gearbox connected to the motor, and housed within the housing;
a shaft configured to be connected to the driving unit and to rotate in conjunction with a rotational motion of the motor;
a nut configured to be coupled to the shaft and to move in a direction parallel to a direction of extension of the shaft in accordance with the rotational motion of the shaft;
at least one pivot unit configured to pivot about a pivot axis in response to a linear movement of the nut; and
a pivot bracket unit configured to pivot in conjunction with a pivoting movement of the at least one pivot unit, and configured to have one end for coupling with an antenna module so that the antenna module rotates about the pivot axis in response to the pivoting movement of the at least one pivot unit.

2. The clamping apparatus of claim 1, wherein the pivot axis is perpendicular to the direction parallel to the direction of extension of the shaft.

3. The clamping apparatus of claim 2, wherein the pivot axis is perpendicular to or parallel to a longitudinal direction of the support pole.

4. The clamping apparatus of claim 1, wherein the direction of extension of the shaft and a motor axis of the motor are non-coaxial but parallel to each other.

5. The clamping apparatus of claim 1, wherein when viewed from a direction perpendicular to both a motor axis of the motor and the pivot axis, the pivot axis is positioned between the motor and the shaft.

6. The clamping apparatus of claim 1, wherein the shaft is formed at least partially with a trapezoidal thread, and the nut is threadedly engaged with the trapezoidal thread.

7. The clamping apparatus of claim 1, wherein the driving unit is arranged adjacent to an inner surface of the housing.

8. The clamping apparatus of claim 1, further comprising:
multiple bearing units mounted on the shaft so as to surround at least some of the shaft on both sides in the direction of extension of the shaft.

9. The clamping apparatus of claim 8, wherein one of the multiple bearing units contacts an inner surface of the housing, and another of the multiple bearing units contacts one side of the driving unit.

10. The clamping apparatus of claim 1, further comprising:
multiple first connecting units, each of which has at least a portion extending in a direction parallel to the pivot axis and is fixed to both sides of the nut relative to the direction parallel to the pivot axis,
wherein each of the multiple first connecting units is connected to each of the at least one pivot unit at a position spaced a predetermined distance from the pivot axis.

11. The clamping apparatus of claim 10, wherein each of the at least one pivot unit includes a through hole formed in a region spaced apart from the pivot axis in a direction parallel to the pivot axis,
wherein each of the multiple first connecting units has at least a portion received in the through hole to make a contact with an inner circumferential surface of the through hole, and
wherein the portion of each of the multiple first connecting units, which is received in the through hole is smaller in cross-sectional area than the through hole.

12. The clamping apparatus of claim 1, further comprising:
multiple second connecting units spaced apart in a direction parallel to the pivot axis and disposed at least partially outside the housing, respectively,
wherein one side of each of the multiple second connecting units is connected to the at least one pivot unit and the other side of each of the multiple second connecting units is connected to the pivot bracket unit.

13. The clamping apparatus of claim 1, wherein a pivot range of the at least one pivot unit, centered on the pivot axis, is from -25° to 25°.

14. The clamping apparatus of claim 1, wherein the at least one pivot unit and the pivot bracket unit are formed symmetrically with respect to an imaginary plane perpendicular to the pivot axis and passing through a center of the shaft.

15. The clamping apparatus of claim 1, further comprising:
an acceleration sensor disposed inside the housing and configured to measure a degree to which the support pole is inclined relative to a ground surface.
